# EUROPEAN PATENT SPECIFICATION

(11) **EP 2 084 207 B1**
(45) Date of publication and mention of the grant of the patent: **17.07.2013**
(21) Application number: 07847442.6
(22) Date of filing: 28.11.2007
(51) Int. Cl.: C08G 63/00

(54) **STABLE LACTIDE PARTICLES**
STABILE LACTID-PARTIKEL
PARTICULES DE LACTIDE STABLES

(30) Priority: 28.11.2006 EP 06124934; 26.07.2007 EP 07113211
(43) Date of publication of application: 05.08.2009
(73) Proprietor: Purac Biochem N.V., 4206 AC Gorinchem (NL)
(72) Inventor: DE VOS, Sicco, 6846 JL Arnhem (NL)
(74) Representative: Beetz, Tom
(86) International application number: PCT/EP2007/062917
(87) International publication number: WO 2008/065130

(56) References cited:
- EP-A1- 1 310 517
- DATABASE WPI Week 198831 Derwent Publications Ltd., London, GB; AN 1988-216856 XP002473872 & JP 63 152956 A (MUSASHINO KAGAKU KENKYUSHO KK) 25 June 1988 (1988-06-25)

## Description

The present invention relates to a method for the manufacture of stable lactide particles, more specifically to a method for the manufacture of lactide particles which are stable enough to be stored and transported at room temperature and which have a quality high enough for use as starting material for polylactic acid.

The continued depletion of landfill space, the depletion of the fossil energy reserves, in particular of oil, the subsequent need to use therefore and in relation to various greenhouse gas related issues, new carbon form renewable resources, and the problems associated with incineration of waste, have led to the need for development of truly biodegradable polymers to be utilized as substitutes for non-biodegradable or partially biodegradable, petrochemical-based polymers in packaging, paper coating and other non-medical industry applications, hereinafter referred to as bulk applications. The use of lactic acid and lactide to manufacture a biodegradable polymer is well known in the medical industry. As disclosed by Nieuwenhuis et al. (US 5,053,485), such polymers have been used for making biodegradable sutures, clamps, bone plates and biologically active controlled release devices. It will be appreciated that processes developed for the manufacture of polymers to be utilized in the medical industry have incorporated techniques that respond to the need for high purity and biocompatibility in the final polymer product.
Furthermore, the processes were designed to produce small volumes of high dollar-value products, with less emphasis on manufacturing cost and yield.

It is known that lactic acid undergoes a condensation reaction to form polylactic acid upon dehydration. Dorough recognized and disclosed in US 1,995,970, that the resulting polylactic acid is limited to a low molecular weight polymer of limited value, based on physical properties, due to a competing depolymerization reaction in which the cyclic dimer of lactic acid, lactide, is generated. As the polylactic acid chain lengthens, the polymerization reaction rate decelerates until it reaches the rate of the depolymerization reaction, which effectively, limits the molecular weight of the resulting polycondensation polymers.

EP 1310517 describes a process for producing a lactic acid polymer having a weight average molecular weight of 15,000 to 50,000 which contains not more than 5 wt.% of a fraction having a weight-average molecular weight of 5,000 or less. The polymer is produced by hydrolyzing a high molecular weight lactic acid polymer, placing the resultant solution comprising the hydrolyzed product under a condition capable of precipitating the objective lactic acid polymer, separating the precipitated lactic acid polymer and collecting them. The lactic acid polymer is stated to be useful as a matrix for sustained-release preparations.

Therefore, in most publications, processes for the production for polylactic acid are described wherein from lactic acid first a prepolymer is prepared, said prepolymer is depolymerized in the presence of a catalyst to form crude lactide by a ring-closure reaction, said crude lactide is subsequently purified and lactide is used as starting material for the preparation of polylactic acid by ring-opening polymerization.

Lactide is also known for use in other purposes, where its stability is of lesser importance. For example, JP63-152956 describes a method for the coagulation of bean curd by adding thereto a powdery dilactide having a particle diameter of 80 mesh or lower.

For the purpose of this description the term polylactic acid and polylactide are used interchangeably. It is well known that lactic acid exists in two forms which are optical enantiomers, designated as D-lactic acid and L-lactic acid. Either D-lactic acid, L-lactic acid, or mixtures thereof may be polymerized to form an intermediate molecular weight polylactic acid which, after the ring-closure reaction, generates lactide as earlier disclosed. The lactide (sometimes also referred to as dilactide), or the cyclic dimer of lactic acid, may have one of three types of stereochemical configurations depending on whether it is derived from two L-lactic acid molecules, two D-lactic acid molecules or an L-lactic acid molecule and a D-lactic acid molecule. These three dimers are designated L-lactide, D-lactide, and meso-lactide, respectively. In addition, a 50/50 mixture of L-lactide and D-lactide with a melting point of about 126°C is often referred to in the literature as D,L-lactide. The optical activity of either lactic acid or lactide is known to alter under certain conditions, with a tendency toward equilibrium at optical inactivity, where equal amounts of the D and L enantiomers are present. Relative concentrations of D and L enantiomers in the starting materials, the presence of impurities or catalysts, varying temperatures, residence times, and pressures are known to affect the rate of such racemization. The optical purity of the lactic acid or the lactide is decisive for the stereochemistry of the polylactic acid obtained upon ring-opening polymerization of the lactide. With respect to polylactic acid, stereochemistry, and molecular weight are the key parameters for polymer quality.

When preparing polylactic acid for the medical industry often crystalline powdery lactide is used as the starting material. These crystals, which are commercially available for over 30 years now, are highly hygroscopic and are packed under inert atmosphere in damp- and air-tight packages and stored in freezers (temperature below 12 °C). It will be clear that these precautions cannot be taken when polylactic acid is used for bulk applications because it would render the product too expensive.

In publications describing processes for the preparation of polylactic acid for bulk applications, the lactide formed and purified is directly fed in its molten, liquid form to a polymerization reactor to form polylactide. See for instance EP 0,623,153 and US 6,875,839. By the direct conversion of the freshly prepared lactide to polylactic acid, the negative effects of the relative instability of lactide can be controlled by minimizing the residence time of the lactide in the reactor. However, this process requires that the lactide production and polylactic acid production are combined. This makes the process rather inflexible and creates an entrance barrier for new polylactic acid producers, because it requires large investments in equipment. Secondly, as the quality of the lactide is decisive for the molecular weight and stereochemistry that can be obtained in the polylactic acid, and the ring-closure process and purification require strict control of the temperature, pressure and residence time, it is also the most delicate part of the polylactic acid production process. The risk of failure in this part of the process enlarges the entrance barrier even more. If new polylactic acid producers for bulk applications could simply be provided with stable, high-quality lactide, this burden would be taken from them and substitution of petrochemical-based polymers with lactic acid-based (co)polymers could actually take place. It has been suggested to transport lactide in its molten form (melting point of D-lactide and L-lactide is 97 °C). Beside the fact that this type of transport is expensive, the transport and storage of lactide in molten state is also detrimental to the quality of the lactide because racemization, hydrolysis, and polymerization reactions are accelerated at these temperatures. The same problem occurs in the direct conversion process when the residence time of the lactide is not precisely controlled.

To this end the present invention is directed to a method for the manufacture of stable, high-quality lactide particles, said method comprising subjecting molten lactide to a flaking process that effectively transforms the liquid lactide melt to a coarse solid granulate. The process according to the invention is specified in claim 1. We have found that lactide particles, also referred to as flakes, produced via the flaking process according to the present invention are stable enough, in terms of chemically stable against occurrence of racemization, oxidation and hydrolysis, for storage and transport at ambient temperature and can readily be used as starting material for the production of polylactic acid for bulk applications. With stable lactide particles is meant that when storing the lactide particles having an initial free acid content of at most 5 meq/kg at 20 degrees Celcius in air, the free acid content will still be below 2000 after 10 weeks of storage.

Further, it was found that the flaking method or process according to the present invention is a rapid, cheap and surprisingly efficient method for producing stable lactide particles. The powdery crystalline lactides used in the medical industry are known to be manufactured via solvent crystallization as this is a technique with which the high chemical purity, that is required in medical applications, can be achieved. Solvent crystallization is however a very expensive, not environmentally friendly and a complex process due to the solvents that are used. The flaking process according to the present invention does not have these disadvantages.

The present flaking process does also not include lengthy processing times and additional extensive drying steps as is the case in for example when a prilling process is used to manufacture lactide particles. And further, problems such as racemization, hydrolysis and oxidation are prevented in using the flaking process according to the present invention, which therefore results in lactide particles of high quality, significantly higher than for example lactide particles made via prilling.

With the flaking process according to the present invention for example, a production rate could be obtained, depending on cooling temperature and drum rotational speed, which was minimally two to three times higher compared to an alternative process used for making lactide pastilles.

Furthermore, the resulting lactide flakes exhibit favorable properties making them very suitable for further processing. We found for example that the lactide flakes made by the method of the present invention can be relatively rapidly and easy processed further in a subsequent melting step leading to short residence times in this melting step. These short residence times offer the advantage that the risk of side reactions occurring, leading to for example the formation of lactic acid, lactoyllactic acid and water, is significantly reduced and thus the purity of the high quality lactide is preserved. In combination with the short residence times required, the temperature of the melting process can be lowered which also is positive as above-mentioned side reactions are less likely to occur. Further, the lactide particles made via the present flaking process are easy to disperse and thus less mechanical input is required for said homogenization process. This also reduces the risk of any side reactions occurring.

The lactide used in the flaking process according to the present invention is in the molten form, meaning that all lactide entering the solidification process is at a temperature above the melting point of the lactide. The flaking process comprises contacting a continuous flow of molten lactide with a surface with a temperature lower than the melting point of the lactide, allowing the lactide melt to solidify on said surface, and removing the solid lactide from that surface, as specified in claim 1. Said surface may be cooled internally or externally and this can be done by various means as known to the skilled person.

In a preferred embodiment, the solidified lactide falls off of the surface under the influence of gravity and is thus removed from the surface.

In another preferred embodiment of the present invention, the solidified lactide on the surface is brought in contact with a means that removes or scrapes off the solidified lactide from said surface for product collection.

The apparatus used for the flaking process, or at least those parts that will be in contact with the lactide, preferably are prepared from corrosion-resistant material such as stainless steel. Further, to avoid water uptake of the lactide particles, the flaking process is preferably conducted under inert gas or dry atmosphere such as under nitrogen or dry air.

The flaking process according to the present invention may be performed with the conventional drum flaker apparatus used in the various thermal processes in chemical and food industries. With said drum flaker, molten lactide solidifies on the surface of the drum, after which it is removed from said surface either by means of gravity or by means of some type of scraping-device.

Various types of drum flakers are possible. Some examples hereof are rotating drum flakers wherein the rotating drum runs through a lactide melt in a dip pan underneath the drum, or rotating drum flakers wherein the lactide melt is "spread" over the rotating drum by means of for example an overhead applicator roll. It is of course also possible to apply the lactide melt on said rotating drum by other means well-known to the person skilled in the art. An example may be the spraying or dripping of lactide melt onto the surface of the drum.

Another example of a suited means for use in the flaking process is a belt flaker. Here the lactide melt can be applied on a cooled and moving belt instead of a rotating drum. The lactide solidifies after which it is removed either by means of gravity or by means of some type of scraping device.

Optionally a sieving step may be performed after the flaking process to avoid dusting during transport and during further processing to form polylactide.

Stable lactide particles can be made having a various surface area per unit of volume. Particles can be obtained with a surface area per unit of volume of between 1000 to 3000 m⁻¹ but also up to 10000 m⁻¹. It was found that lactide particles having a surface area per unit of volume of from 3000 to 10000 m⁻¹ showed the most ideal chemical stability for transport and storage and for further processing in the subsequent melting step or other processing steps.

As mentioned-above, the optical purity of the lactide is very important for the stereochemistry of the polylactic acid that is obtained. Therefore, it is preferred that the lactide present in the particles according to the invention contains more than 95% by weight D- or L-lactide, preferably more than 98.5% by weight D- or L-lactide, most preferably more than 99.5% D-or L-lactide by weight.

The water content of the lactide is also an important factor for the stability of the lactide particles. Contamination by water ultimately hydrolyzes the lactide to lactic acid. It was found that if the water content is below 200 ppm, the stability of the lactide particles when stored at ambient temperature in airtight and vapor-tight packages is ensured for several months. Preferably, the water content is below 100 ppm because it further increases the stability and thus shelf life of the lactide. The water content of the lactide can be measured by means of a Karl-Fisher titration as will be known by the artisan.

Also the free acid content of the lactide (either lactic acid or lactoyl lactic acid) is important for the stability and quality of the lactide. The presence of lactic acid and or lactoyl lactic acid in the lactide monomer will result in reduced rates of polymerization in the further manufacture of polylactic acid and in polylactic acid polymers of limited molecular weight. If the free acid content is below 50 milli-equivalents per Kg lactide (meq.Kg⁻¹) the stability of the lactide particles when stored at ambient temperature in air-tight and vapor-tight packages is ensured for several months. Preferably, the acid content is below 20 meq.Kg⁻¹ because it further increases the stability of the lactide. More preferably the acid content is between 0 and 10 meq.Kg⁻¹ and most preferably, the free acid content is less than 5 meq.Kg⁻¹. The free acid content can be measured by means of titration using for instance sodium methylate or potassium methylate in water-free methanol, as will be clear for the artisan. The lactide used as starting material for the shaping process may have been prepared by any conventional lactide process such as water removal from a lactic acid solution or condensation reaction of lactate esters, followed by a ring-closure reaction in a lactide reactor with the help of a catalyst. Optionally the crude lactide is further purified by for instance distillation and/or crystallization prior to the shaping process.

The lactide reactor can be of any suitable type that is designed for heat sensitive materials. A reactor that can maintain a uniform film thickness, such as a falling film or agitated thin-film evaporator is most preferred, because film formation increases the rate of mass transfer. When the rate of mass transfer is increased, lactide can quickly form and vaporize, and as lactide vaporizes, more lactide is produced as dictated by the polylactic acid/lactide equilibrium reaction. Optionally these lactide reactors are operated under reduced pressure such as between about 1 mmHg and 100 mmHg. The temperature of the lactide formation is kept between 150 °C and 250 °C. Many suitable catalysts are known, such as metal oxides, metal halides, metal dusts, anionic clay, and organic metal compounds derived from carboxylic acids or the like. Normally a tin(II) catalyst is used for lactide formation.

Stabilizers may also be added to the lactide reactor in order to facilitate lactide formation and discourage degenerative lactic acid and lactide reactions. Stabilizers, such as antioxidants, either manufactured or naturally occurring, can be used to reduce the number of degradation reactions that occur during the process of polylactic acid and lactide production. Stabilizers may also reduce the rate of lactide formation during this process. Therefore, efficient production of lactide requires proper reactor design for minimal thermal severity and a proper balance between the catalyst and any use of process stabilizers.

A variety of stabilizers may be used. The stabilizing agent may include primary antioxidants and/or secondary antioxidants. Primary antioxidants are those which inhibit free radical propagation reactions, such as and not limited to alkylidene bisphenols, alkyl phenols, aromatic amines, aromatic nitro and nitroso compounds, and quinones. To prevent formation of free radicals secondary (or preventive) antioxidants break down hydroperoxides. Some non-limiting examples of secondary antioxidants include: phosphites, organic sulfides, thioethers, dithiocarbamates, and dithiophosphates. Antioxidants include such compounds as trialkyl phosphites, mixed alkyl/aryl phosphites, alkylated aryl phosphites, sterically hindered aryl phosphites, aliphatic spirocyclic phosphites, sterically hindered phenyl spirocyclics, sterically hindered bisphosphonites, hydroxyphenyl propionates, hydroxy benzyls, alkylidene bisphenols, alkyl phenols, aromatic amines, thioethers, hindered amines, hydroquinones, and mixtures thereof. Preferably, phosphite-containing compounds, hindered phenolic compounds, or other phenolic compounds are used as process stabilizing antioxidants. Most preferably, phosphite-containing compounds are used. The amount of process stabilizer used can vary depending upon the optical purity desired of the resulting lactide, the amount and type of catalyst used, and the conditions inside of the lactide reactor. Normally amounts varying from 0.01 to 0.3 wt.% process stabilizer can be used.

Next to stabilizers also dehydration or anti-hydrolysis agents may be used. These dehydration agents favor the formation of lactide. Further, they may be used in a later stage of the manufacturing process for polylactic acid as well as for preventing chain scission by water. Compounds based on peroxide may be used for this purpose but preferred are compounds containing the carbodiimide functionality. The carbodiimide compound is a compound having one or more carbodiimide groups in a molecule and also includes a polycarbodiimide compound. As a monocarbodiimide compound included in the carbodiimide compounds, dicyclohexyl carbodiimide, diisopropyl carbodiimide, dimethyl carbodiimide, diisobutyl carbodiimide, dioctyl carbodiimide, diphenyl carbodiimide, naphthyl carbodiimide, etc. may be exemplified. In particular industrially easily available compounds such as dicyclohexyl carbodiimide, diisopropyl carbodiimide or products like Stabaxol® by Rheinchemie are used.

It is also possible to add above-mentioned process stabilizers and dehydration agents to the lactide at a later stage, such as for instance prior to the flaking and/or after the flaking step. If the stabilizers are added to the lactide after flaking, the stabilizers may be sprayed or coated onto the lactide flakes.

We have further found that the presence of the above-mentioned process stabilizers and dehydration agents also increases the stability of the lactide particles during storage.

It is of course desired to have as little as possible material such as process stabilizers and dehydration agents present in the lactide particles other than lactide. Therefore, the lactide particle usually comprises more than 95% by weight lactide, preferably more than 98.5% by weight lactide, most preferably more than 99.5% by weight.

Depending on the lactide preparation and/or purification method the flaking process according to the present invention can either be combined with the preparation and/or purification, or not. For instance, if the lactide is obtained form distillation, it makes sense to directly couple a flaking machine to the distillation column because the lactide is already in its melted form. Also, if the final purification step of the lactide comprises meltcrystallization, a flaking machine can be directly coupled to the melt crystallisator.

The invention is further illustrated by means of the following non-limiting examples.

### EXAMPLE 1

Flaking of L-lactide using a lab-scale rotating drum flaker.

Fresh L-lactide ex. Purac® (<5 meq/Kg free lactic acid) was molten using a stirred, oil-heated vessel. Subsequently, the liquid with a temperature of between 105-120 °C was metered during flaking into the dip pan underneath a rotating drum flaker having a surface area of 0.75 m². The liquid lactide was dosed at such a rate that the level of the liquid remained constant in the dip pan.
Due to the internal cooling of the drum, the lactide solidifies on the drum surface. The cooling water for the rotating drum was kept at a temperature between 10 and 35 °C and the rotational speed at between 5 and 15rpm. Further, the dipping depth of the drum into the molten lactide was varied and tests were done at a dipping depth of 20 mm and 50 mm. The flakes produced have an average height of between 0.3 and 0.7 mm, a width of 1 to 3mm and a length of 3 to 10mm. The surface area per unit of volume varied between 4000 and 10000 m⁻¹. The bulk density was between 500 and 600 kg/m⁻³.

## Claims

1. Method for the manufacture of stable lactide particles comprising contacting a continuous flow of molten lactide, said lactide having a water content below 200 ppm and a free acid content below 50 milli-equivalent per kg lactide, with a surface having a temperature lower than the melting point of the lactide and removing the solid lactide as lactide particles from that surface, the stable lactide particles having a surface area per unit of volume of between 1000 to 10000m⁻¹, a water content below 200 ppm and a free acid content below 50 milli-equivalent per kg lactide.

2. Method according to claim 1 wherein said surface is cooled by external or internal means.

3. Method according to claim 1 or 2 wherein said removal is by means of contacting the surface with the solidified lactide with a scraping device.

4. Method according to claim 1 or 2 wherein said removal takes place by the lactide falling off the surface under the influence of gravity.

5. Method according to any one of the preceding claims wherein said method is carried out with a drum flaker or belt flaker.

6. Method according to any one of the preceding claims which is carried out in an apparatus at least those parts of which that are in contact with the lactide are prepared from corrosion-resistant material.

7. Method according to any one of the preceding claims which is conducted under inert gas or dry atmosphere.

8. Method according to anyone of the previous claims wherein the obtained lactide particles are sieved.

9. Method according to any one of the preceding claims, wherein lactide particles are obtained which have a surface area per unit of volume of from 1000 to 3000 m⁻¹ wherein the term "stable" means that the lactide particles have an initial free acid content of at most 5 meq/kg at 20 degrees Celcius in air, and after 10 weeks of storage the free acid content will still be below 2000 meq/kg.

10. Method according to any one of the preceding claims 1-8, wherein lactide particles are obtained which have a surface area per unit of volume of from 3000 to 10000 m⁻¹.

11. Method according to any one of the preceding claims, wherein the lactide particles comprise more than 95% by weight lactide, preferably more than 98.5% by weight lactide, most preferably more than 99.5% by weight lactide.

12. Method according to any one of the preceding claims, wherein the lactide present in the lactide particles contains more than 95% by weight D-lactide, preferably more than 98.5% by weight D-lactide, most preferably more than 99.5% D-lactide by weight.

13. Method according to any one of claims 1-10, wherein the lactide present in the lactide particles contains more than 95% by weight L-lactide, preferably more than 98.5% by weight L-lactide, most preferably more than 99.5% L-lactide by weight.

14. Method according to any one of the preceding claims, wherein the lactide particles have a water content below 200 ppm, preferably below 100 ppm, and most preferably below 50 ppm.

15. Method according to any one of the preceding claims, wherein the lactide particles have a free lactic acid content below 50 milli-equivalents per kg lactide (meq/kg), preferably below 20 meq/kg, and most preferably between 0 and 10 meq/kg.

## Patentansprüche

1. Verfahren zur Herstellung von stabilen Lactid-Partikeln, umfassend das in Kontakt bringen eines kontinuierlichen Stroms von geschmolzenem Lactid, wobei das Lactid einen Wassergehalt von weniger als 200 ppm und einen Gehalt an freier Säure von weniger als 50 Milliäquivalent pro kg Lactid aufweist, mit einer Oberfläche, die eine Temperatur aufweist, die geringer als der Schmelzpunkt des Lactids ist und das Entfernen des festen Lactids als Lactid-Partikel von dieser Oberfläche, wobei die stabilen Lactid-Partikel eine Oberfläche pro Volumeneinheit von 1000 bis 10000 m⁻¹, einen Wassergehalt von weniger als 200 ppm und einen Gehalt an freier Säure von weniger als 50 Milliäquivalent pro kg Lactid aufweisen.

2. Verfahren gemäß Anspruch 1, wobei die Oberfläche durch äußere oder innere Mittel gekühlt wird.

3. Verfahren gemäß Anspruch 1 oder 2, wobei das Entfernen durch das in Kontakt bringen der Oberfläche mit dem verfestigten Lactid mit einer Abstreifvorrichtung erfolgt.

4. Verfahren gemäß Anspruch 1 oder 2, wobei das Entfernen durch Abfallen des Lactids von der Oberfläche durch den Einfluss der Gravitation stattfindet.

5. Verfahren gemäß einem der vorstehenden Ansprüche, wobei das Verfahren mit einer Flockierwalze oder einem Flockierband durchgeführt wird.

6. Verfahren gemäß einem der vorstehenden Ansprüche, welches in einer Vorrichtung durchgeführt wird, bei der zumindest die Teile davon, welche in Kontakt mit dem Lactid stehen, aus korrosionsbeständigem Material hergestellt sind.

7. Verfahren gemäß einem der vorstehenden Ansprüche, welches unter Inertgas oder einer trockenen Atmosphäre durchgeführt wird.

8. Verfahren gemäß einem der vorstehenden Ansprüche, wobei die erhaltenen Lactid-Partikel gesiebt werden.

9. Verfahren gemäß einem der vorstehenden Ansprüche, wobei Lactid-Partikel erhalten werden, welche eine Oberfläche pro Volumeneinheit von 1000 bis 3000 m⁻¹ aufweisen, wobei der Begriff "stabil" bedeutet, dass die Lactid-Partikel eine anfänglichen Gehalt an freier Säure von höchstens 5 mEq/kg bei 20 Grad Celsius an Luft aufweisen und nach 10 Wochen Lagern der Gehalt an freier Säure immer noch niedriger als 2000 mEq/kg ist.

10. Verfahren gemäß einem der vorstehenden Ansprüche 1 bis 8, wobei Lactid-Partikel erhalten werden, welche eine Oberfläche pro Volumeneinheit von 3000 bis 10000 m⁻¹ aufweisen.

11. Verfahren gemäß einem der vorstehenden Ansprüche, wobei die Lactid-Partikel mehr als 95 Gew.-% Lactid, vorzugsweise mehr als 98,5 Gew.-% Lactid, am stärksten bevorzugt mehr als 99,5 Gew.-% Lactid umfassen.

12. Verfahren gemäß einem der vorstehenden Ansprüche, wobei das Lactid, das in den Lactid-Partikeln vorhanden ist mehr als 95 Gew.-% D-Lactid, bevorzugt mehr als 98,5 Gew.-% D-Lactid, am stärksten bevorzugt mehr als 99,5 Gew.-% D-Lactid enthält.

13. Verfahren gemäß einem der Ansprüche 1 bis 10, wobei das Lactid, das in den Lactid-Partikeln vorhanden ist, mehr als 95 Gew.-% L-Lactid, bevorzugt mehr als 98,5 Gew.-% L-Lactid, am stärksten bevorzugt mehr als 99,5 Gew.-% L-Lactid enthält.

14. Verfahren gemäß einem der vorstehenden Ansprüche, wobei die Lactid-Partikel einen Wassergehalt von weniger als 200 ppm, bevorzugt von weniger als 100 ppm, und am stärksten bevorzugt von weniger als 50 ppm aufweisen.

15. Verfahren gemäß einem der vorstehenden Ansprüche, wobei die Lactid-Partikel einen Gehalt an freier Milchsäure von weniger als 50 Milliäquivalenten pro kg Lactid (mEq/kg), bevorzugt von weniger als 20 mEq/kg und am stärksten bevorzugt zwischen 0 und 10 mEq/kg aufweisen.

## Revendications

1. Procédé pour la fabrication de particules de lactide stables comprenant le contact d'un flux continu de lactide fondu, ledit lactide ayant une teneur en eau en-dessous de 200 ppm et une teneur en acide libre en-dessous de 50 milliéquivalents par kg de lactide, avec une surface ayant une température inférieure au point de fusion du lactide et le retrait du lactide solide en tant que particules de lactide de cette surface, les particules de lactide stables ayant une surface par unité de volume comprise entre 1000 à 10000 m⁻¹, une teneur en eau en-dessous de 200 ppm et une teneur en acide libre en-dessous de 50 milliéquivalents par kg de lactide.

2. Procédé selon la revendication 1 dans lequel ladite surface est refroidie par des moyens externes ou internes.

3. Procédé selon la revendication 1 ou 2 dans lequel ledit retrait est réalisé par le biais de la mise en contact de la surface avec le lactide solidifié avec un dispositif de raclage.

4. Procédé selon la revendication 1 ou 2 dans lequel ledit retrait a lieu par la chute du lactide de la surface sous l'influence de la gravité.

5. Procédé selon l'une quelconque des revendications précédentes dans lequel ledit procédé est effectué avec une écailleuse à tambour ou une écailleuse à bande.

6. Procédé selon l'une quelconque des revendications précédentes qui est effectué dans un appareil dont au moins les parties de celui-ci qui sont en contact avec le lactide sont préparées à partir de matériaux résistants à la corrosion.

7. Procédé selon l'une quelconque des revendications précédentes qui est conduit sous gaz inerte ou atmosphère sèche.

8. Procédé selon l'une quelconque des revendications précédentes dans lequel les particules de lactide obtenues sont tamisées.

9. Procédé selon l'une quelconque des revendications précédentes, dans lequel les particules de lactide qui sont obtenues ont une aire de surface par unité de volume de 1000 à 3000 m⁻¹ dans lequel le terme "stable" signifie que les particules de lactide ont une teneur initiale en acide libre d'au plus 5 méq/kg à 20 degrés Celsius dans l'air, et après 10 semaines de stockage la teneur en acide libre sera toujours en-dessous de 2000 méq/kg.

10. Procédé selon l'une quelconque des revendications précédentes 1-8, dans lequel les particules de lactide qui sont obtenues ont une aire de surface par unité de volume de 3000 à 10000 m⁻¹.

11. Procédé selon l'une quelconque des revendications précédentes, dans lequel les particules de lactide comprennent plus de 95% de lactide en poids, de préférence plus de 98,5% en poids de lactide, tout préférentiellement plus de 99,5% en poids de lactide.

12. Procédé selon l'une quelconque des revendications précédentes, dans lequel le lactide présent dans les particules de lactide contient plus de 95% en poids de D-lactide, de préférence plus de 98,5% en poids de D-lactide, tout préférablement plus de 99,5% de D-lactide en poids.

13. Procédé selon l'une quelconque des revendications 1-10, dans lequel le lactide présent dans les particules de lactide contient plus de 95% en poids de L-lactide, de préférence plus de 98,5% en poids de L-lactide, tout préférentiellement plus de 99,5% de L-lactide en poids.

14. Procédé selon l'une quelconque des revendications précédentes, dans lequel les particules de lactide ont une teneur en eau en-dessous de 200 ppm, de préférence en-dessous de 100 ppm, et tout préférentiellement en-dessous de 50 ppm.

15. Procédé selon l'une quelconque des revendications précédentes, dans lequel les particules de lactide ont une teneur en acide lactique libre en-dessous de 50 milliéquivalents par kg de lactide (méq / kg), de préférence en-dessous de 20 méq/kg, et tout préférentiellement entre 0 et 10 méq/kg.
